Europäisches Patentamt

European Patent Office

Office européen des brevets

(19)

(11) Veröffentlichungsnummer: **0 014 423**
**B1**

(12) # EUROPÄISCHE PATENTSCHRIFT

(45) Veröffentlichungstag der Patentschrift:
25.11.81

(21) Anmeldenummer: 80100443.3

(22) Anmeldetag: 29.01.80

(51) Int. Cl.³: **B 23 B 51/04**, B 23 B 29/034

(54) **Bohrkopf.**

(30) Priorität: 01.02.79 DE 2903814

(43) Veröffentlichungstag der Anmeldung:
20.08.80 Patentblatt 80/17

(45) Bekanntmachung des Hinweises auf die Patenterteilung:
25.11.81 Patentblatt 81/47

(84) Benannte Vertragsstaaten:
AT CH FR GB IT SE

(56) Entgegenhaltungen:
DE-A-2 317 568
DE-A-2 746 232
US-A-3 711 216

(73) Patentinhaber: MAPAL Fabrik für Präzisionswerkzeuge
Dr. Kress KG, Obere Bahnstrasse 13, D-7080 Aalen (DE)

(72) Erfinder: Kress, Dieter, Dr. Dipl.-Ing., Walkstrasse 87,
D-7080 Aalen (DE)
Erfinder: Häberle, Friedrich, Fliederstrasse 14,
D-7081 Lauchheim (DE)

(74) Vertreter: Maier, Eugen, Dr.-Ing. et al, Patentanwälte
Dr.-Ing. Eugen Maier Dr.-Ing. Eckhard Wolf
Pischekstrasse 19, D-7000 Stuttgart 1 (DE)

Bohrkopf

Die Erfindung betrifft einen Bohrkopf mit einem Spanmaul zur Spanabfuhr und mehreren in einer Achsenebene liegenden, stufenförmig angeordneten, das Spanmaul begrenzenden Wendeschneidplatten.

Bei einem Bohrkopf dieser Art (DE-C-1 752 457) sind zwei mehrschneidige Schneidplatten einzeln derart an einer etwa radial verlaufenden Wand des Spanmauls eingespannt, daß zwischen ihren einander zugewandten benachbarten Schneidkanten ein Spiel besteht. Um die beim Bohren auf die beiden Schneidplatten wirkenden Kräfte aufzunehmen und die Lage der aktiven Schneidkanten zu sichern, bedarf es einer besonderen, mit erhöhten Herstellungskosten verknüpften Gestaltung des Bohrkopfes. Diese besondere Gestaltung des Bohrkopfes macht es unmöglich, eine radiale Verstellbarkeit der Schneidplatten vorzusehen.

Ein Vollbohrkopf mit einer auswechselbaren, an einer Begrenzungswand des Spanmauls angeschraubten Wendeschneidplatte, die mittels eines Gewindestiftes stufenlos verstellbar ist, ist aus der DE-B-2 522 565 bekannt. Einer solchen Ausbildung des Bohrkopfes haftet jedoch der Nachteil an, daß auf eine Schneidplatte, deren Schneidkante eine dem Halbdurchmesser des Bohrkopfes entsprechende Länge aufweist, ein verhältnismäßig großer, radial unterschiedlicher Schnittdruck wirkt, den aufzunehmen wiederum eine besonders aufwendige Einspannvorrichtung vorgesehen werden muß. Ein weiterer Nachteil besteht darin, daß bei größerem Durchmesser des Werkzeugs die Platte größere Abmessungen aufweist, was bezüglich der stabilen Lagerung und aus Kostengründen nachteilig ist.

Der Erfindung liegt die Aufgabe zugrunde, einen Bohrkopf mit einer durch Verwendung mehrerer Schneidplatten unterteilten Hauptschneide so auszubilden, daß die einzelnen Schneidplatten sich zur Sicherung einer stabilen Lage ihrer aktiven Schneidkanten gegenseitig unterstützen und eine radiale Verstellbarkeit der einzelnen Schneidplatten insgesamt mittels einer auf die achsennahe Schneidplatte wirkenden Verstellvorrichtung möglich ist.

Diese Aufgabe wird gemäß der Erfindung mit Mitteln gelöst, die den Gegenstand des Patentanspruchs 1 bilden. Die stabile Lagerung der Schneidplatten wird vorteilhafterweise noch dadurch erhöht, daß die Schneidplatten eine Gestalt gemäß dem Kennzeichen des Patentanspruchs 2 aufweisen, die nicht nur die Ausbildung der Schneidplatten als Wendeschneidplatten ermöglicht, sondern auch bewirkt, daß die Schneidplatten unter der Einwirkung des Schnittdruckes gegen die rückwärtige Fläche der die Schneidplatten aufnehmenden Aussparung in der Begrenzungswand des Spanmauls gepreßt werden. Zur Erzielung eines wirksamen Kraftschlusses zwischen dem Verstellorgan und der achsennahen Schneidplatte ist diese Platte vorteilhafterweise so ausgebildet, wie dies im Patentanspruch 3 angegeben ist. Während die übrigen Schneidplatten, um die einzelnen Schneidkanten zum Einsatz zu bringen, um eine Diagonale gewendet werden, die die spitzen Ecken der Schneidplatten verbindet, erfolgt der Einsatz der verschiedenen Schneidkanten bei der achsennahen Schneidplatte dadurch, daß diese um die Achse der eine Spannschraube aufnehmenden Bohrung gedreht wird. Um der unterschiedlichen Schnittgeschwindigkeit von der Mitte $(v=0)$ bis zum äußeren Rand $(v_{max})$ Rechnung zu tragen, ist es zweckmäßig, die Schneidplatten aus verschiedenen Hartmetallqualitäten herzustellen, z. B. die innere Platte aus einer K-Qualität und die äußere Platte aus einer P-Qualität im Sinne der ISO-Norm.

In der Zeichnung ist ein Ausführungsbeispiel des erfindungsgemäßen Bohrkopfes in schematischer Weise dargestellt. Es zeigt

Fig. 1 eine Längsseitenansicht des in seinem vorderen Teil ausgebrochenen Bohrkopfes,

Fig. 2 eine Stirnseitenansicht des Bohrkopfes,

Fig. 3 eine Seitenansicht des vorderen Endes des Bohrkopfes in Richtung des in Fig. 2 eingezeichneten Pfeils gesehen.

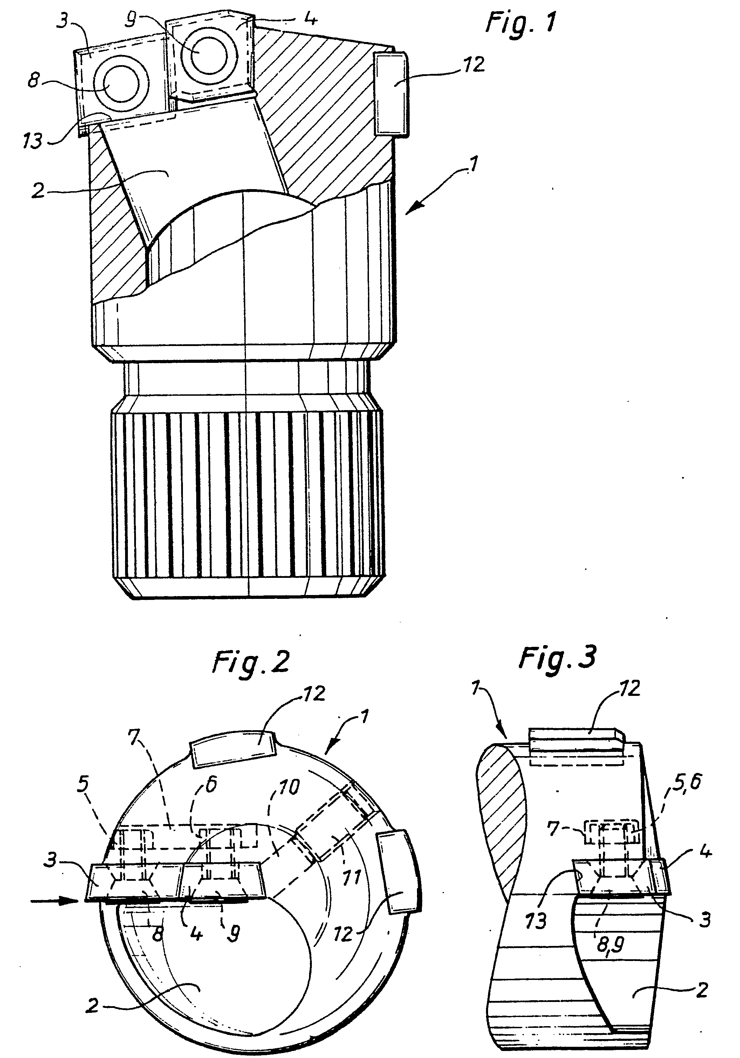

Der in seinem rückwärtigen Teil rohrförmig ausgebildete Bohrkopf 1 weist, wie aus Fig. 2 ersichtlich ist, ein etwa die Größe des Quadranten aufweisendes Spanmaul 2 auf. In einer Aussparung der das Spanmaul begrenzenden Wand sind die beiden eine Bohrung aufweisenden Schneidplatten 3 und 4 angeordnet. Diese Bohrungen nehmen Schrauben 8 und 9 auf, deren je ein Gewinde aufweisendes Ende in einen Gleitstein 5 bzw. 6 eingeschraubt ist, die in einer Aussparung 7 angeordnet sind. Die radiale Verstellung der Schneidplatten 3 und 4 erfolgt mittels des auf die Schneidplatte 4 einwirkenden als Keil ausgebildeten Verstellorgans 10, auf dessen Stirnfläche eine Madenschraube 11 einwirkt. Die in axialer Richtung rückwärtige Abstützung der Schneidplatte 3 erfolgt durch die flächige Anlage der Schmalseitenfläche dieser Schneidplatte gegen eine nach Art einer Hinterschneidung ausgebildete Schulter 13 des Grundkörpers des Bohrkopfes 1. Am Umfang des Bohrkopfes 1 sind zwei Führungsleisten 12 angeordnet.

**Patentansprüche**

1. Bohrkopf (1) mit einem Spanmaul (2) zur Spanabfuhr und mehreren mit ihren Schneiden in einer Achsenebene liegenden, stufenförmig angeordneten, gegen eine Schulter (13) des Bohrkopfes (1) anliegenden, das Spanmaul (2) begrenzenden Schneidplatten (3, 4), die mittels sie durchsetzender Schrauben (8, 9) in einem Sitz des Bohrkopfes (1) mit diesem verspannbar sind, dadurch gekennzeichnet, daß die Schneidplatten (3, 4) eine Parallelogrammgestalt aufweisen, flächig gegeneinander anliegen, parallel zueinander verlaufende Hauptschneidkanten aufweisen, mittels der sie durchsetzenden Schrauben (8, 9) mit Gleitsteinen (5, 6) verspannbar sind, die in radial verlaufenden, Hinterschneidungen aufweisenden Aussparungen (7) verschiebbar angeordnet sind, und mittels eines auf eine Schmalfläche der inneren Schneidplatte (4) einwirkenden Verstellorgans (10) radial verstellbar sind.

2. Bohrkopf nach Anspruch 1, dadurch gekennzeichnet, daß mindestens die äußere, gegebenenfalls die äußeren Schneidplatten (3) in zu den Schneidkanten parallelen Schnittebenen einen parallelogrammförmigen Querschnitt aufweisen.

3. Bohrkopf nach den Ansprüchen 1 und 2, dadurch gekennzeichnet, daß die innenliegende, gegen das Verstellorgan (10) anliegende Schneidplatte (4) in zu den Schneidkanten parallelen Schnittebenen einen trapezförmigen Querschnitt aufweist.

4. Bohrkopf nach einem der Ansprüche 1 bis 3, dadurch gekennzeichnet, daß die Schneidplatten (3, 4) entsprechend ihrer unterschiedlichen mittleren Schnittgeschwindigkeit aus unterschiedlichem Werkstoff bestehen.

## Claims

1. A drilling head (1) with a chip-removal gap (2) and a plurality of cutting plates (3, 4), the cutting edges of which lie in one axial plane and which are arranged in stepped formation, bear against a shoulder (13) of the drilling head (1), form a boundary of the chipremoval gap (2) and can be clamped to the drilling head (1) in a seat therein by means of screws (8, 9) which pass through them, characterized in that the cutting plates (3, 4) have the shape of a parallelogram bear flat against each other, have main cutting edges extending parallel with each other, can be clamped by means of the screws (8, 9) passing through them to slide elements (5, 6) displaceably arranged in radially extending recesses (7) having undercut portions, and are radially displaceable by means of an adjusting member (10) acting on a narrow face of the inner cutting plate (4).

2. A drilling head according to Claim 1, characterized in that at least the outer cutting plate or plates (3), as the case may be, has or have a cross-section of parallelogram shape in sectional planes parallel with the cutting edges.

3. A drilling head according to Claims 1 and 2, characterized in that the inner cutting plate (4), bearing against the adjusting member (10), has a trapezoidal cross-section in the sectional planes parallel with the cutting edges.

4. A drilling head according to any one of Claims 1 to 3, characterized in that the cutting plates (3, 4) are made of different materials to suit their differing mean cutting speeds.

## Revendications

1. Tête d'alésage (1) comportant un orifice (2) pour l'évacuation des copeaux et plusieurs plaquettes de coupe (3, 4), dont les arêtes de coupe se trouvent dans un plan axial, qui sont disposées en marches d'escalier, s'appuient contre un épaulement (13) de la tête d'alésage (1) limitant l'orifice (2) de dégagement des copeaux et peuvent être bloquées sur la tête d'alésage (1) et dans un siège pratiqué dans celle-ci par des vis qui les traversent, caractérisée en ce que les plaquettes de coupe (3, 4) ont la forme de parallélogrammes, s'appliquent l'une sur l'autre par des surfaces, présentent des arêtes de coupe principales parallèles entre elles, peuvent être, par des vis (8, 9) qui les traversent, bloquées sur des coulisseaux (5, 6) qui sont disposés à coulissement dans des évidments (7) disposés radialement et présentant des contre-dépouilles, et peuvent être reglées, dans leur position radiale, par un organe de réglage (10) agissant sur une petite face de la plaquette de coupe (4) la plus proche de l'axe, dite plaquette intérieure.

2. Tête d'alésage selon la revendication 1, caractérisée en ce que la plaquette de coupe (ou les plaquettes de coupe) situées à l'extérieur (3) ont, dans des plans de coupe parallèles aux arêtes de coupe, des sections en forme de parallèlogrammes.

3. Tête d'alésage selon les revendications 1 et 2, caractérisée en ce que la plaquette de coupe intérieure (4) qui s'appuie sur l'organe de réglage (10) a dans des plans de coupe parallèles aux arêtes de coupe, une section en forme de trapèze.

4. Tête d'alésage selon une des revendications 1 à 3, caractérisée en ce que les plaquettes de coupe (3, 4) sont faites de matériaux différents, en fonction de leurs différentes vitesses moyennes de coupe.

0 014 423

Fig. 1

Fig. 2

Fig. 3